# EUROPÄISCHE PATENTSCHRIFT

(11) **EP 1 305 995 B1**
(45) Veröffentlichungstag und Bekanntmachung des Hinweises auf die Patenterteilung: **05.03.2008**
(21) Anmeldenummer: 02021997.8
(22) Anmeldetag: 01.10.2002
(51) Int. Cl.: A01D 41/14, A01D 45/02

(54) **Schwenkvorrichtung für ein mehrteiliges Erntevorsatzgerät**
Pivoting mechanism for multiple part header of a combine harvester
Dispositif de pivotement pour une tête de récolte à plusieurs parties d'une machine agriculteure

(30) Priorität: 24.10.2001 DE 10151849
(43) Veröffentlichungstag der Anmeldung: 02.05.2003
(73) Patentinhaber: CLAAS Saulgau GmbH, 88348 Bad Saulgau (DE)
(72) Erfinder: Rauch, Hans, 88348 Bad Saulgau (DE)

(56) Entgegenhaltungen:
- EP-A- 0 464 387
- EP-A- 0 992 187
- DE-A- 4 407 812
- DE-C- 3 828 293
- US-A- 5 845 472

## Beschreibung

Die Erfindung bezieht sich auf eine Schwenkvorrichtung für ein mehrteiliges Erntevorsatzgerät, insbesondere zum Ernten stängeliger Halmgüter, mit mehreren in Arbeitsstellung nebeneinander angeordneten um vertikale Drehachsen umlaufenden, inneren und äußeren Schneid- und Förderscheiben, wobei zumindest ein Teil der inneren und/oder äußeren Schneid- und Förderscheiben von einer breiten Arbeitsstellung in eine schmale Transportstellung bewegbar ist, nach dem Oberbegriff des Patentanspruches 1.

Um bei Transportfahrten von Erntemaschinen mit großen Arbeitsbreiten einen Abbau des Erntevorsatzgerätes und ein Mitführen auf einem gesonderten Transportwagen zu vermeiden, sind bereits verschiedene Einrichtungen bekannt, die in der Transportstellung eine Breitenreduzierung des Vorsatzgerätes ermöglichen. Dies erfolgt, wie z.B. bei dem in der EP 0 992 187 A beschriebenen Erntevorsatzgerät, indem diejenigen Bauteile, die über die zugelassene Transportbreite hinausragen, in entsprechender Weise so geschwenkt werden, dass die zugelassene Transportbreite eingehalten wird.

In der DE 38 28 293 C1 ist beispielsweise ein Erntevorsatzgerät für die Maisernte mit mehreren in Arbeitsstellung nebeneinander angeordneten Schneid- und Fördertrommeln dargestellt, bei dem die beiden äußeren Trommeln an verschwenkbaren Tragarmen gelagert sind, die zur Breitenreduzierung in der Transportstellung um eine aufrechte Schwenkachse zur Mitte des Emtevorsatzgerätes hin verschwenkbar sind. Die äußeren Schneid- und Fördertrommeln sind dabei an jeweils zwei gelenkig miteinander verbundenen Tragarmen gelagert, deren Schwenkachsen den Schneidtrommeln unmittelbar benachbart angeordnet sind. Die Tragarme weisen in der Arbeitsstellung eine zusammengeklappte Lage und in der Transportstellung, in der sich die äußeren Schneid- und Fördertrommeln vor den inneren Schneidtrommeln befinden, eine in Fahrtrichtung weisende gestreckte Lage zueinander auf. Nach einer anderen Variante, bei der die Schwenkachsen seitlich und in Fahrtrichtung geneigt angeordnet sind, werden die äußeren Schneidtrommeln in der Transportstellung über die inneren Schneidtrommeln geschwenkt. Dadurch wird eine Längenreduzierung des Erntevorsatzgerätes sowie eine Entlastung des Verschwenkgestänges erreicht. Bei beiden Ausführungsvarianten wird zwar eine kompakte und platzsparende Bauweise ermöglicht, jedoch ist deren Anwendung auf Erntevorsatzgeräte mit vier Schneidtrommeln und einer dementsprechenden geringen Arbeitsbereite beschränkt.

Der Erfindung liegt die Aufgabe zugrunde, die Schwenkeinrichtung so auszuführen und anzuordnen, dass sie auch für Erntevorsatzgeräte mit großen Arbeitsbreiten geeignet ist.

Erfindungsgemäß wird diese Aufgabe durch die im Patentanspruch 1 genannten kennzeichnenden Merkmale gelöst. Weitere vorteilhafte Ausführungen des Erfindungsgegenstandes ergeben sich aus den nachgeordneten Ansprüchen.

Dadurch, dass zumindest die jeweils äußere Schneid- und Förderscheibe mit der ihr benachbarten inneren Schneid- und Förderscheibe um eine in Fahrtrichtung weisende Schwenkachse bewegbar ist und die äußeren Schneid- und Förderscheiben die ihnen benachbarten inneren Schneid- und Förderscheiben zumindest in einem auswählbaren Schwenkbereich satellitenartig umlaufen, gelingt es, mit geringem bautechnischen Aufwand eine besonders schmale Transportstellung zu erreichen.

In einer besonders vorteilhaften Ausführungsform wird der satellitenartige Umlauf der äußeren Schneid- und Förderscheiben durch Verschwenken der äußeren Schneid- und Förderscheiben um annährend vertikale Schwenkachsen bewirkt, das heißt, es handelt sich um eine Bewegung, die ohne die Verwendung weiterer Umlenkmechanismen - wie Gelenkvielecke, Rollen etc. - auskommen kann.

Der bautechnische Aufwand kann in besonders vorteilhafter Weise dadurch minimiert werden, dass die Schwenkachsen der äußeren Schneid- und Förderscheiben mit den Drehachsen der ihnen benachbarten inneren Schneid- und Förderscheiben zusammenfallen.

In einer besonders einfachen und robusten Ausführungsform sind beim satellitenartigen Umlauf der äußeren Schneid- und Förderscheiben die Hüllkurven der äußeren Schneidund Förderscheiben zu den Hüllkurven der ihnen benachbarten inneren Schneid- und Förderscheiben beabstandet.

Im Gegensatz dazu kann auch eine Ausführungsform gewählt werden, bei der beim satellitenartigen Umlauf der äußeren Schneid- und Förderscheiben die Hüllkurven der äußeren Schneid- und Förderscheiben die Hüllkurven der ihnen benachbarten inneren Schneid- und Förderscheiben wenigstens teilweise überdecken, so dass eine weitere Transportbreitenreduzierung vorgenommen wird, und eine verbesserte Erntegutübergabe zwischen den ineinandergreifenden Schneid- und Förderscheiben erreicht wird.

Wählt man den Hüllkreisdurchmesser der äußeren Schneid- und Förderscheiben kleiner als den Hüllkreisdurchmesser der ihnen benachbarten inneren Schneid- und Förderscheiben, so erhält man sowohl in der Arbeits- als auch in der Transportstellung einen günstigeren Schwerpunkt des Vorsatzgerätes als bei der Verwendung von Schneid- und Förderscheiben gleichen Hüllkreisdurchmessers.

In einer besonders vorteilhaften Ausführungsform ist der Schwenkbereich der äußeren Schneid- und Förderscheiben sowohl in der Transport- als auch in der Arbeitsstellung beliebig einstellbar. Diese Ausführungsform ermöglicht in der Arbeitsstellung eine erleichterte Bearbeitung von Feldern mit Hindernissen (Überlandleitungen, Telefonmasten, Findlingen etc.) und von Randstreifen. Die Transportstellungen auf nicht öffentlichen Wegen zwischen den Schlägen können bei einer freien Einstellbarkeit des Schwenkbereiches auch zeitoptimiert - und nicht nur straßentransportvorschriftsgerecht - gewählt werden.

In einer besonders vorteilhaften Ausführungsform ist der Schwenkbereich der äußeren Schneid- und Förderscheiben durch Anschläge begrenzt, so dass Kollisionen mit benachbarten Arbeitsorganen auch ohne konzentriertes Arbeiten des Fahrers sicher vermieden werden.

Ist die in Fahrtrichtung weisende Schwenkachse der äußeren und ihnen benachbarten inneren Scheid- und Förderscheiben im Zwischenraum zwischen den inneren und den ihnen benachbarten äußeren Schneid- und Förderscheiben angeordnet, so erhält man eine besonders bauraumsparende, wenig verschleißanfällige Konstruktion.

Dadurch, dass die Schwenkbewegungen der äußeren und ihnen benachbarten inneren Schneid- und Förderscheiben von der Arbeits- in die Transportstellung und umgekehrt über hydraulische und/oder elektrische Antriebe steuerbar sind, kann ein selbsttätiges Verschwenken von der Arbeits- in die Transportstellung und umgekehrt realisiert werden.

Eine deutliche Erhöhung der Stabilität der erfindungsgemäßen Vorrichtung wird erreicht, wenn die äußeren Schneid- und Förderscheiben mit der Drehachse der ihnen benachbarten inneren Schneid- und Förderscheiben durch einen Tragarm verbunden sind und die Verbindung in vertikaler Richtung oberhalb und/oder unterhalb der äußeren und der ihnen benachbarten inneren Schneid- und Förderscheiben erfolgt.

Die Erfindung wird nachstehend an einem Ausführungsbeispiel erläutert. In den zugehörigen Zeichnungen zeigen
- Fig. 1: die Draufsicht auf den vorderen Bereich eines Feldhäckslers mit einem Erntevorsatzgerät in der Arbeitsstellung,
- Fig. 2: die Draufsicht auf den vorderen Bereich eines Feldhäckslers, wobei in Fahrtrichtung gesehen die linke Seite des Erntevorsatzgerätes die Arbeitsstellung vor dem Schwenkvorgang und die rechte Seite die Schwenkstellungen I und II zeigt,
- Fig. 3: die Draufsicht auf den vorderen Bereich eines Feldhäckslers mit dem Erntevorsatzgerät in der Transportstellung

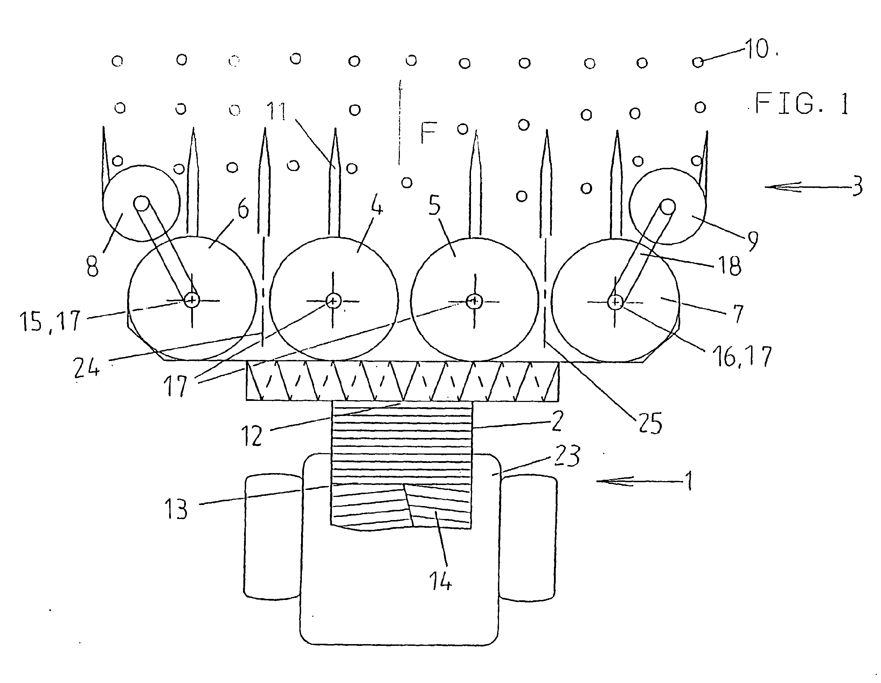

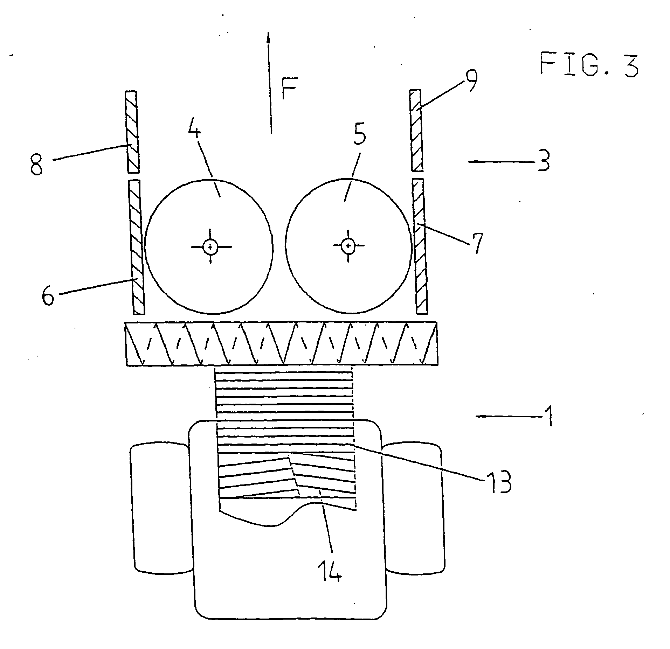

In Figur 1 ist ein Feldhäcksler (1) dargestellt, an dessen Einzugsgehäuse (2) ein Erntevorsatzgerät (3) adaptiert ist. Das Erntevorsatzgerät (3) besteht aus mehreren in Arbeitsstellung nebeneinander angeordneten Schneid- und Förderscheiben (4-9), denen das Erntegut (10) über den Schneid- und Förderscheiben (4-9) zugeordneten feststehende oder rotierende Abteiler (11) zugeführt wird. In diesem Ausführungsbeispiel sind zwei inneren Schneid- und Förderscheiben (4, 5) zwei äußere Schneid- und Förderscheiben (6, 7) und diesen Förderscheiben (6, 7) wiederum zwei äußere Schneid- und Förderscheiben (8, 9) zugeordnet. Nach Zuführung des Erntegutes (10) zu den äußeren Schneid- und Förderscheiben (8, 9) wird das geschnittene Erntegut (10) in Fahrtrichtung (F) vor oder hinter den benachbarten inneren Schneid- und Förderscheiben (6, 7) unter Nutzung ihrer Fördertätigkeit in Zusammenarbeit mit hier nicht näher dargestellten aktiv angetriebenen Fördereinrichtungen (z. B. Ausräumertrommeln) oder Leitelementen (z. B. Leitwänden) zusammen mit dem frisch geschnittenen Erntegut (10) der Schneid- und Förderscheiben (6, 7) zu den inneren Schneid- und Förderscheiben (4, 5) geleitet, die das gesamte Erntegut (10) der Schneid- und Förderscheiben (4-9) wenigstens einer Einzugsvorrichtung (12) übergeben, die es an die Vorpresswalzen (13) übergibt, die das Erntegut wiederum der Häckseltrommel (14) übergeben. In diesem Ausführungsbeispiel erfolgt die Förderung des Erntegutes (10) von den Förderscheiben (6, 7) aufgrund der günstigeren Achslast mit in Fahrtrichtung (F) im hinteren Zwischenbereich zwischen den inneren und den ihnen benachbarten Förderscheiben (4, 5 und 6, 7) angeordneten Ausräumertrommeln.
Prinzipiell sind jedoch an allen Förderscheiben (4-9) beide Drehrichtungen möglich. Das Erntegut (10) kann also jeweils in Fahrtrichtung (F) vor oder aber auch hinter den Schneidund Förderscheiben (4-9) entlang gefördert werden. Die Anzahl der zusammenarbeitenden Schneid- und Förderscheiben ist nicht auf die in den Figuren 1-3 gezeigte Scheibenanzahl begrenzt.

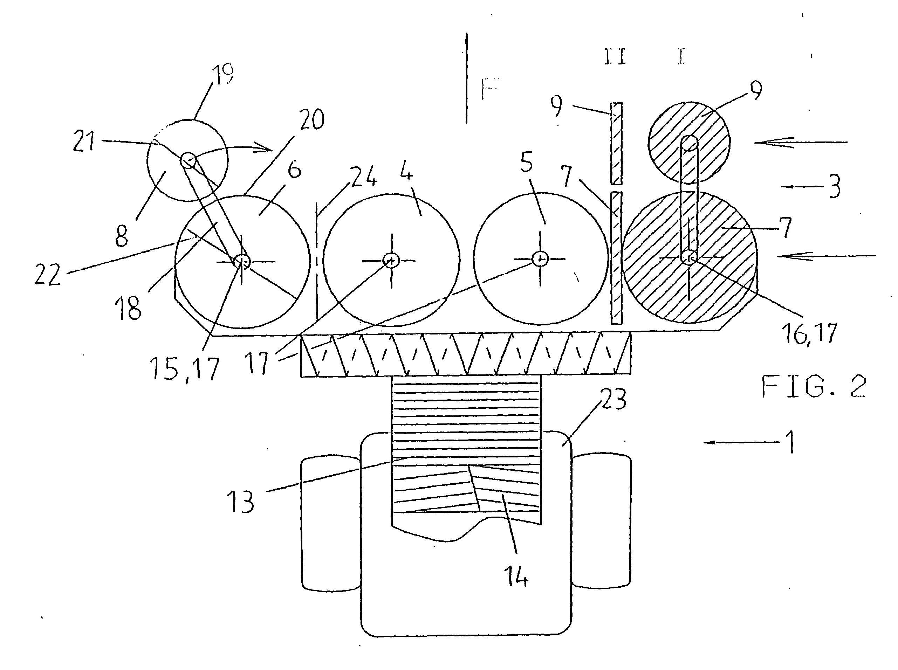

Figur 2 zeigt, dass zum Erreichen einer zulässigen Straßentransportbreite und zur erleichterten Bearbeitung von Randstreifen und Feldern mit Hindernissen wenigstens die äußeren Schneid- und Förderscheiben (8, 9) um annährend vertikale Achsen (15, 16) unabhängig voneinander satellitenartig in noch näher zu beschreibenden Weise um die ihnen benachbarten inneren Schneid- und Förderscheiben (6, 7) verschwenkt werden können (Schwenkstellung I). Der Schwenkbereich ist durch den Benutzer frei wählbar. Er kann aber durch hier nicht näher dargestellte Anschläge begrenzt sein, die die Kollision der verschwenkten Schneid- und Förderscheiben (8, 9) mit anderen benachbarten Baugruppen verhindern sollen. In einer besonders einfachen Ausführungsform der Erfindung werden die Drehachsen (17) der Schneid- und Förderscheiben (6, 7) als Schwenkachsen (15, 16) genutzt, ein Tragarm (18) verbindet diese Schwenkachsen (15, 16) mit dem Anlenkpunkt an den äußeren Schneid- und Förderscheiben (8, 9), der auch - nicht wie in den Figuren 1-3 dargestellt - außermittig liegen kann. Der Tragarm (18) für das Verschwenken der äußeren Schneid- und Förderscheiben (8, 9) in nahezu horizontaler Richtung kann sowohl ober- als auch unterhalb der äußeren Schneid- und Förderscheiben (8, 9) und der ihnen benachbarten Schneid- und Förderscheiben (6, 7) angeordnet sein. Zur Erhöhung der Stabilität können auch Tragarme ober- und unterhalb der äußeren Schneid- und Förderscheiben (8, 9) und der ihnen benachbarten Schneid- und Förderscheiben (6, 7) angeordnet sein. Wie in dem in den Figuren 1-3 dargestellten Beispiel können die Hüllkurven (19) der äußeren Schneidund Förderscheiben (8, 9) zu den Hüllkurven (20) der ihnen benachbarten Schneid- und Förderscheiben (6, 7) beabstandet sein. Bei einer derartigen Konstruktion ist es zur Vermeidung von aufwendigen gelenkigen Ausführungen des Tragarms (18) sinnvoll, den Hüllkreisdurchmesser (21) der äußeren Schneid- und Förderscheiben (8, 9) kleiner zu wählen als den Hüllkreisdurchmesser (22) der den äußeren Schneid- und Förderscheiben (8, 9) benachbarten Schneid- und Förderscheiben (6, 7). Es liegt aber auch im Rahmen der Erfindung, dass die Hüllkurven (19) der äußeren Schneid- und Förderscheiben (8, 9) sich mit den Hüllkurven (20) der ihnen benachbarten Schneid- und Förderscheiben (6, 7) in nicht näher dargestellter Weise teilweise überdecken. Bei derartigen Ausführungsformen können die Hüllkreisdurchmesser (21) der äußeren Schneid- und Förderscheiben (8, 9) ohne aufwendige Konstruktionen für den Tragarm (18) sehr viel größer gewählt werden als dies bei beabstandeten Hüllkurven der Fall ist. Der Schwenkvorgang I selbst wird in an sich bekannter Weise durch hydraulische und/oder elektrische Antriebsvorrichtungen bewirkt. Die Auslösung des Schwenkvorganges I selbst erfolgt auf ein Signal, das der Benutzer in der Kabine (23) auslöst.

Zum weiteren Reduzieren der Transport- bzw. an besondere Bedingungen adaptierten Arbeitsbreite können die äußeren Schneid- und Förderscheiben (8, 9) und die ihnen benachbarten Schneid- und Förderscheiben (6, 7) zusammen um die in Fahrtrichtung weisenden Schwenkachsen (24, 25) nach oben verschwenkt werden (Schwenkstellung II).

### Bezugszeichenliste

- 1: Feldhäcksler
- 2: Einzugsgehäuse
- 3: Erntenvorsatzgerät
- 4: innere Schneid- und Förderscheiben
- 5: innere Schneid- und Förderscheiben
- 6: den äußeren Schneid- und Förderscheiben
benachbarte innere Schneid- und Förderscheiben
- 7: den äußeren Schneid- und Förderscheiben
benachbarte innere Schneid- und Förderscheiben
- 8: äußere Schneid- und Förderscheiben
- 9: äußere Schneid- und Förderscheiben
- 10: Erntegut
- 11: Abteiler
- 12: Einzugsvorrichtung
- 13: Vorpresswalze
- 14: Häckseltrommel
- 15: Achse
- 16: Achse
- 17: Drehachse
- 18: Tragarm
- 19: Hüllkurve der äußeren Schneid- und Förderscheiben
- 20: Hüllkurve der den äußeren Schneid- und
Förderscheiben benachbarten inneren
Schneid- und Förderscheiben
- 21: Hüllkurvendurchmesser der äußeren
Schneid- und Förderscheiben
- 22: Hüllkurvendurchmesser der den äußeren
Schneid- und Förderscheiben benachbarten
inneren Schneid- und Förderscheiben
- 23: Kabine
- 24: in Fahrtrichtung weisende Schwenkachse
- 25: in Fahrtrichtung weisende Schwenkachse
- F: Fahrtrichtung
- I: Schwenkstellung I
- II: Schwenkstellung II

## Patentansprüche

1. Schwenkvorrichtung für ein mehrteiliges Erntevorsatzgerät, insbesondere zum Ernten stängeliger Halmgüter, mit mehreren in Arbeitsstellung nebeneinander angeordneten um vertikale Drehachsen umlaufenden, inneren und äußeren Schneid- und Förderscheiben, wobei die äußeren Schneid- und Förderscheibe um annährend vertikale Schwenkachsen verschwenkbar sind, wobei zumindest ein Teil der inneren und/oder äußeren Schneid- und Förderscheiben von einer breiten Arbeitsstellung in eine schmale Transportstellung und
zumindest die jeweils äußere Schneid- und Förderscheibe (8, 9) mit der ihr benachbarten inneren Schneid- und Förderscheibe (6, 7) um eine in Fahrtrichtung (F) weisende Schwenkachse (24, 25) bewegbar ist **dadurch gekennzeichnet, dass** die äußeren Schneid- und Förderscheiben (8,9) die ihren benachbarten inneren Schneid- und Förderscheiben (6,7) zumindest in einem auswählbaren Schwenkbereich satellitenartig umlaufen.

2. Schwenkvorrichtung nach einem oder mehreren der vorhergehenden Ansprüche,
**dadurch gekennzeichnet,**
**dass** die Schwenkachse (15, 16) der äußeren Schneid- und Förderscheiben (8, 9) mit der Drehachse (17) der ihnen benachbarten inneren Schneid- und Förderscheiben (6, 7) zusammenfällt.

3. Schwenkvorrichtung nach einem oder mehreren der vorhergehenden Ansprüche,
**dadurch gekennzeichnet,**
**dass** beim satellitenartigen Umlauf der äußeren Schneid- und Förderscheiben (8, 9) die Hüllkurven (19) der äußeren Schneid- und Förderscheiben (8, 9) zu den Hüllkurven (20) der ihnen benachbarten inneren Schneid- und Förderscheiben (6, 7) beabstandet sind.

4. Schwenkvorrichtung nach einem oder mehreren der vorhergehenden Ansprüche ,
**dadurch gekennzeichnet,**
**dass** beim satellitenartigen Umlauf der äußeren Schneid- und Förderscheiben (8, 9) die Hüllkurven (19) der äußeren Schneid- und Förderscheiben (8, 9) die Hüllkurven (20) der ihnen benachbarten inneren Schneid- und Förderscheiben (6, 7) wenigstens teilweise überdecken.

5. Schwenkvorrichtung nach einem oder mehreren der vorhergehenden Ansprüche,
**dadurch gekennzeichnet,**
**dass** der Hüllkreisdurchmesser (21) der äußeren Schneid- und Förderscheiben (8, 9) kleiner als der Hüllkreisdurchmesser (22) der ihnen benachbarten inneren Schneid- und Förderscheiben (6, 7) ist.

6. Schwenkvorrichtung nach einem oder mehreren der vorhergehenden Ansprüche,
**dadurch gekennzeichnet,**
**dass** der Schwenkbereich der äußeren Schneid- und Förderscheiben (8, 9) beliebig einstellbar ist.

7. Schwenkvorrichtung nach einem oder mehreren der vorhergehenden Ansprüche,
**dadurch gekennzeichnet,**
**dass** der Schwenkbereich der äußeren Schneid- und Förderscheiben (8, 9) durch Anschläge begrenzt ist.

8. Schwenkvorrichtung nach einem oder mehreren der vorhergehenden Ansprüche,
**dadurch gekennzeichnet,**
**dass** die in Fahrtrichtung (F) weisende Schwenkachse (24, 25) der äußeren Schneid-und Förderscheiben (8, 9) und den ihnen benachbarten inneren Schneid- und Förderscheiben (6, 7) im Zwischenraum zwischen den inneren und den ihnen benachbarten inneren Schneid- und Förderscheiben (4, 5 und 6, 7) angeordnet ist.

9. Schwenkvorrichtung nach einem oder mehreren der vorhergehenden Ansprüche,
**dadurch gekennzeichnet,**
**dass** die Schwenkbewegungen der äußeren und ihnen benachbarten inneren Schneid-und Förderscheiben (8, 9 und 6, 7) von der Arbeits- in die Transportstellung und umgekehrt über hydraulische und/oder elektrische Antriebe steuerbar sind.

10. Schwenkvorrichtung nach einem oder mehreren der vorhergehenden Ansprüche,
**dadurch gekennzeichnet,**
**dass** die äußeren Schneid- und Förderscheiben (8, 9) mit der Drehachse (17) der ihnen benachbarten inneren Schneid- und Förderscheiben (6, 7) durch einen Tragarm (18) verbunden sind und die Verbindung in vertikaler Richtung oberhalb und/oder unterhalb der äußeren und der ihnen benachbarten inneren Schneid- und Förderscheiben (8, 9 und 6, 7) erfolgt.

11. Schwenkvorrichtung nach einem oder mehreren der vorhergehenden Ansprüche,
**dadurch gekennzeichnet,**
**dass** den den äußeren Schneid- und Förderscheiben (8, 9) benachbarten inneren Schneid- und Förderscheiben (6, 7) eine Vielzahl äußerer Schneid- und Förderscheiben (8, 9) schwenkbeweglich zugeordnet sind.

## Claims

1. A pivoting arrangement for a multi-part front-mounting harvesting implement, in particular for harvesting stalked crops, comprising a plurality of inner and outer cutting and conveyor discs which are arranged in mutually juxtaposed relationship in the working position and which rotate about vertical axes of rotation, wherein the outer cutting and conveyor discs are pivotable about approximately vertical pivot axes, wherein at least a part of the inner and/or outer cutting and conveyor discs is movable from a wide working position into a narrow transport position and at least the respective outer cutting and conveyor disc (8, 9) is movable with the inner cutting and conveyor disc (6, 7) adjacent thereto about a pivot axis (24, 25) pointing in the direction of travel (F), **characterised in that** the outer cutting and conveyor discs (8, 9) move satellite-like around the inner cutting and conveyor discs (6, 7) adjacent thereto at least in a selected pivotal range.

2. A pivoting arrangement according to claim 1 **characterised in that** the pivot axis (15, 16) of the outer cutting and conveyor discs (8, 9) coincides with the axis of rotation (17) of the inner cutting and conveyor discs (6, 7) which are adjacent to them.

3. A pivoting arrangement according to one or more of the preceding claims **characterised in that** in the satellite-like orbital movement of the outer cutting and conveyor discs (8, 9) the envelope curves (19) of the outer cutting and conveyor discs (8, 9) are spaced in relation to the envelope curves (20) of the inner cutting and conveyor discs (6, 7) which are adjacent to them.

4. A pivoting arrangement according to one or more of the preceding claims **characterised in that** in the satellite-like orbital movement of the outer cutting and conveyor discs (8, 9) the envelope curves (19) of the outer cutting and conveyor discs (8, 9) at least partially overlap the envelope curves (20) of the inner cutting and conveyor discs (6, 7) which are adjacent to them.

5. A pivoting arrangement according to one or more of the preceding claims **characterised in that** the envelope circle diameter (21) of the outer cutting and conveyor discs (8, 9) is smaller than the envelope circle diameter (22) of the inner cutting and conveyor discs (6, 7) which are adjacent to them.

6. A pivoting arrangement according to one of the preceding claims **characterised in that** the pivotal range of the outer cutting and conveyor discs (8, 9) can be adjusted as desired.

7. A pivoting arrangement according to one of the preceding claims **characterised in that** the pivotal range of the outer cutting and conveyor discs (8, 9) is restricted by abutments.

8. A pivoting arrangement according to one or more of the preceding claims **characterised in that** the pivot axis (24, 25), facing in the direction of travel (F), of the outer cutting and conveyor discs (8, 9) and the inner cutting and conveyor discs (6, 7) which are adjacent to them is arranged in the intermediate space between the inner and the adjacent inner cutting and conveyor discs (4, 5 and 6, 7).

9. A pivoting arrangement according to one or more of the preceding claims **characterised in that** the pivotal movements of the outer and adjacent inner cutting and conveyor discs (8, 9 and 6, 7) from the working position into the transport position and vice-versa are controllable by way of hydraulic and/or electric drives.

10. A pivoting arrangement according to one or more of the preceding claims **characterised in that** the outer cutting and conveyor discs (8, 9) are connected to the axis of rotation (17) of the inner cutting and conveyor discs (6, 7) which are adjacent to them by a carrier arm (18) and the connection is made in a vertical direction above and/or below the outer and the adjacent inner cutting and conveyor discs (8, 9 and 6, 7).

11. A pivoting arrangement according to one or more of the preceding claims **characterised in that** a plurality of outer cutting and conveyor discs (8, 9) are pivotably movably associated with the inner cutting and conveyor discs (6, 7) which are adjacent to the outer cutting and conveyor discs (8, 9).

## Revendications

1. Dispositif de pivotement pour un outil frontal de récolte en plusieurs parties, notamment pour la récolte de produits sur tiges, comportant plusieurs disques de coupe et d'amenée intérieurs et extérieurs qui, dans la position de travail, sont disposés les uns à côté des autres et tournent autour d'axes de rotation verticaux, les disques de coupe et d'amenée extérieurs pouvant pivoter autour d'axes de pivotement sensiblement verticaux, au moins une partie des disques de coupe et d'amenée intérieurs et/ou extérieurs pouvant être amenés d'une position de travail large dans une position de transport étroite et au moins le disque de coupe et d'amenée (8, 9) extérieur concerné et le disque de coupe et d'amenée (6, 7) intérieur voisin de celui-ci pouvant être déplacés autour d'un axe de pivotement (24, 25) orienté dans la direction d'avance (F), **caractérisé en ce que** les disques de coupe et d'amenée (8, 9) extérieurs, au moins à l'intérieur d'une zone de pivotement sélectionnable, tournent autour des disques de coupe et d'amenée (6, 7) intérieurs à la manière de satellites.

2. Dispositif de pivotement selon une ou plusieurs des revendications précédentes, **caractérisé en ce que** l'axe de pivotement (15, 16) des disques de coupe et d'amenée (8, 9) extérieurs coïncide avec l'axe de rotation (17) des disques de coupe et d'amenée (6, 7) intérieurs voisins.

3. Dispositif de pivotement selon une ou plusieurs des revendications précédentes, **caractérisé en ce que** lors de la rotation à la manière de satellites des disques de coupe et d'amenée (8, 9) extérieurs, les courbes enveloppes (19) des disques de coupe et d'amenée (8, 9) extérieurs sont écartées des courbes enveloppes (20) des disques de coupe et d'amenée (6, 7) intérieurs voisins.

4. Dispositif de pivotement selon une ou plusieurs des revendications précédentes, **caractérisé en ce que** lors de la rotation à la manière de satellites des disques de coupe et d'amenée (8, 9) extérieurs les courbes enveloppes (19) des disques de coupe et d'amenée (8, 9) extérieurs recouvrent au moins partiellement les courbes enveloppes (20) des disques de coupe et d'amenée (6, 7).

5. Dispositif de pivotement selon une ou plusieurs des revendications précédentes, **caractérisé en ce que** le diamètre (21) de cercle enveloppe des disques de coupe et d'amenée (8, 9) extérieurs est inférieur au diamètre de cercle enveloppe des disques de coupe et d'amenée (6, 7) intérieurs.

6. Dispositif de pivotement selon une ou plusieurs des revendications précédentes, **caractérisé en ce que** la zone de pivotement disques de coupe et d'amenée (8, 9) extérieurs est réglable.

7. Dispositif de pivotement selon une ou plusieurs des revendications précédentes, **caractérisé en ce que** la zone de pivotement disques de coupe et d'amenée (8, 9) extérieurs est limitée par des butées.

8. Dispositif de pivotement selon une ou plusieurs des revendications précédentes, **caractérisé en ce que** l'axe de pivotement (24, 25) orienté dans la direction d'avance (F) des disques de coupe et d'amenée (8, 9) extérieurs et des disques de coupe et d'amenée (6, 7) intérieurs est situé dans l'espace entre les disques de coupe et d'amenée (6, 7) intérieurs et les disques de coupe et d'amenée (4, 5) intérieurs.

9. Dispositif de pivotement selon une ou plusieurs des revendications précédentes, **caractérisé en ce que** les déplacements de pivotement des disques de coupe et d'amenée extérieurs et des disques de coupe et d'amenée intérieurs (8, 9 et 6, 7) de la position de travail dans la position de transport et inversement peuvent être commandés par des mécanismes hydrauliques et/ou électriques.

10. Dispositif de pivotement selon une ou plusieurs des revendications précédentes, **caractérisé en ce que** les disques de coupe et d'amenée (8, 9) extérieurs sont reliés à l'axe de rotation (17) des disques de coupe et d'amenée (6, 7) intérieurs voisins par un bras support (18) et que la liaison, vu dans la direction verticale, s'effectue au-dessus et/ou au-dessous des disques de coupe et d'amenée (8, 9) extérieurs et des disques de coupe et d'amenée (6, 7) intérieurs voisins

11. Dispositif de pivotement selon une ou plusieurs des revendications précédentes, **caractérisé en ce qu'**aux disques de coupe et d'amenée (6, 7) intérieurs voisins des disques de coupe et d'amenée (8, 9) extérieurs sont associés avec possibilité pivotement plusieurs disques de coupe et d'amenée (8, 9) extérieurs.
